Europäisches Patentamt

**European Patent Office**

**Office européen des brevets**

(11) Publication number: **0 185 796**

**A1**

(12) **EUROPEAN PATENT APPLICATION**

(21) Application number: **84116328.0**

(22) Date of filing: **27.12.84**

(51) Int. Cl.⁴: **B 32 B 17/10**
**C 03 C 27/12**

(43) Date of publication of application:
**02.07.86 Bulletin 86/27**

(84) Designated Contracting States:
**BE DE FR GB IT**

(71) Applicant: **MITSUBISHI MONSANTO CHEMICAL COMPANY**
**5-2, Marunouchi 2-chome Chiyoda-ku**
**Tokyo(JP)**

(72) Inventor: **Tanino, Iwao**
**287-85, Tsukushino**
**Abiko-shi Chiba-ken(JP)**

(72) Inventor: **Haijima, Yoshiaki**
**29-8-403, Sakuragaoka-machi**
**Tsuchiura-shi Ibaraki-ken(JP)**

(74) Representative: **Wächtershäuser, Günter, Dr.**
**Tal 29**
**D-8000 München 2(DE)**

(54) **Fan-shaped interlayer for a curved laminate sheet glass.**

(57) A fan-shaped interlayer for a curved laminated sheet glass, characterized in that deviations of the shrinkage factor, the thickness and the surface roughness at any part of said interlayer from the respective average values are within ±1%, ±40 μm and ±5 μm, respectively.

EP 0 185 796 A1

- 1 -

FAN-SHAPED INTERLAYER FOR A CURVED LAMINATE SHEET GLASS

The present invention relates to a fan-shaped interlayer for a curved laminated sheet glass. More particularly, the present invention relates to such an interlayer adapted for a curved laminated sheet glass such as a windshield of an automobile, whereby the deaeration during the pre-pressing operation can be effected consistently without irregularities, the optical distortion of the laminated sheet glass can be minimized, and the impact resistance of the laminated sheet glass can be improved.

Heretofore, an interlayer for a laminated sheet glass used to be supplied by interlayer manufacturers to glass manufacturers in the form of a roll of its original sheet material. In order to prevent blocking of the interlayer in such a rolled form, it has been common to uniformly apply an adhesion-preventing agent such as sodium hydrogen carbonate, in a fine powder form, to the original sheet material. Further, such an original sheet material inherently has a thermal strain or a stress-strain caused by the heat history or the tension exerted during the preparation thereof. Accordingly, when such an original sheet material was used for the preparation of a laminated sheet glass, it used to be required to wash the interlayer with water and dry it to remove the fine powder attached thereon, and there used to be a shrinkage of the interlayer during the pre-pressing step, which is an undesirable phenomenon to the laminated sheet glass manufacturers.

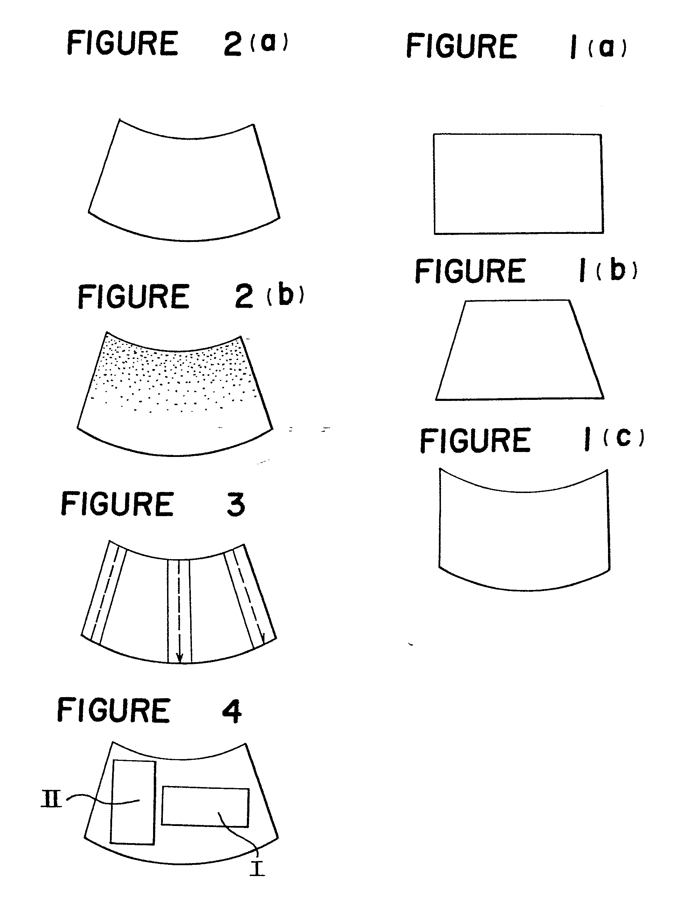

Therefore, for the preparation of an interlayer to be used for a curved laminated sheet glass such as a windshield of an automobile, it used to be common to cut out an interlayer in e.g. a rectangular, trapezoid or curved shape, as shown in a plan view in Figure 1(a), (b) and (c), in a slightly larger size taking into account the shrinkage factor and in order to minimize the loss of the interlayer. Accordingly, it used to be necessary to provide a step of removing or trimming the peripheral portion of the interlayer protruded along the periphery of the laminated sheet glass and unrelated to the lamination of the laminated sheet glass. This step has been conducted usually by hands and involved cumbersome and dangerous operations. Further, the operation is not only time consuming but also uneconomical with a substantial loss of the material. Thus, the manufacturers used to be obliged to bear the low yield of a large amount of the original sheet material for the interlayer and the substantial cost for the extra operation. Furthermore, a substantial cost has been required also for the disposal or incineration of the trimmed refuse.

In recent years, a stretching apparatus or method for an interlayer suitable for a curved laminated sheet glass has been proposed, e.g. in Japanese Examined Patent Publications No. 45351/1978 and No. 9776/1983. According to such an apparatus or method, an interlayer is stretched under heating to form a curved shape, and then the curved interlayer is cut along lines perpendicular to the curvature into a shape corresponding to the shape of the windshield. Particularly when an interlayer having a colored zone along the direction of the flow of the original sheet material, is to be fabricated to conform with the curvature of the lamianted sheet glass, it is almost essential to stretch the interlayer with the apparatus or method represented by e.g. Japanese Examined Patent Publications No. 45351/1978 and No. 9776/1983. Thus, such an apparatus or method is quite useful. However, the interlayer stretched and cut by such an apparatus or method, has drawbacks inherent to the process where the interlayer is curved by exerting a heat or stress. For instance, there may be mentioned (1) a variation in the thickness of various parts of the obtained interlayer, (2) a change in the pattern imprinted, for the deaeration, on the surface of the original sheet material, and (3) the residual strain in the obtained interlayer.

Namely, when the interlayer is curved under heating or stress, the thickness of a portion stretched in a greater degree becomes thinner, while the thickness of the portion stretched in a less degree becomes relatively thicker. When such an interlayer having a partial variation in the thickness is used for the preparation of a laminated sheet glass, it is likely that a so called optical distortion will be led, whereby an image will be seen in a distorted form when viewed through the lamianted sheet glass thereby obtained. Further, the portion of the interlayer where the thickness is thin, is likely to bring about a deterioration of the impact resistance (penetration resistance) which is one of the important requirements for a laminated sheet glass for automobiles. In order to facilitate the deaeration between the interlayer and glass sheets in the step of pre-pressing an assembly with the interlayer sandwiched between glass sheets, a convex and concave pattern with its roughness and shape extremely precisely controlled, is usually provided on the surface of the interlayer. When such an interlayer is stretched, the roughness and the shape of the pattern deviate from the optimum conditions, whereby the deaeration on the surface of the interlayer at the time of the pre-pressing, tends to be inadequate, and an air is likely to remain after the lamination in the laminated sheet glass, thus leading to a deterioration of the outer appearance of the product or a decrease in the yield of the laminated sheet glass.

The present inventors have conducted extensive researches to overcome the conventional technical drawbacks, i.e. to avoid the trimming loss of the material during the production of a laminated sheet glass, improve the operation efficiency and to provide an interlayer having excellent deaeration efficiency for the pre-pressing and excellent impact resistance and thus suitable for a curved laminated sheet glass. As a result, it has been found possible to solve the conventional technical drawbacks by cutting an interlayer having substantially uniform thickness, surface roughness and shrinkage in a shape corresponding to the curved laminated sheet glass, and then supplying the interlayer to the glass manufacturers. The present invention has been accomplished based on this discovery.

Namely, it is an object of the present invention to provide an interlayer for a laminated sheet glass having uniform thickness, surface roughness and shrinkage with no substantial irregularities over the entire surface of the interlayer and which fits the shape of a curved laminated sheet glass.

Thus, the present invention provides a fan-shaped interlayer for a curved laminated sheet glass, characterized in that deviations of the shrinkage factor, the thickness and the surface roughness at any part of said interlayer from the respective average values are within $\pm 1\%$, $\pm 40$ µm and $\pm 5$ µm, respectively.

Now, the present invention will be described in detail with reference to the preferred embodiments.

In the accompanying drawings, Figures 1(a), (b) and (c) are plan views of conventional interlayers prior to the preparation of laminated sheet glass, respectively.

Figures 2(a) and (b) are plan views of interlayers of the present invention.

Figure 3 is a plan view of an interlayer showing the portions where the thickness was measured.

Figure 4 is a plan view of a laminated sheet glass showing the portions where optical distortion was measured.

The interlayer for a laminated sheet glass according to the present invention is a sheet cut into a form corresponding to the shape of a curved laminated sheet glass. The shape is usually a curved shape in the form of a fan, as shown in the plan views of Figures 2(a) and (b). In order to obtain a fan-shaped interlayer, it is important to cut an original elongate sheet material into a predetermined fan-shape without exerting any deformation due to a heat or tension while unwinding a rolled elongate original sheet material. On the surface of the original sheet material, an extremely well controlled pattern is provided to present a rough surface to facilitate the deaeration at the time of the preparation of a laminated sheet glass. The sheet material usually has a substantially uniform thickness within a range of from 250 to 1000 μm, preferably from 300 to 800 μm. The average shrinkage factor and the average surface roughness are preferably adjusted at level of about 2% and about 25 μm, respectively. A blocking-preventing agent may be applied on the original sheet material to prevent the blocking of the interlayers to one another. However, it is preferred to store the interlayers under cooling without application of such an agent, whereby the steps of removing the blocking-preventing agent and drying can be omitted, and the objects of maintaining the surface pattern of the sheet material and preventing the blocking can be attained simultaneously. The original sheet material may be made of any material so long as it is useful as an interlayer for a laminated sheet glass. However, it is usual to employ a polyvinyl butyral, a polyvinyl alcohol derivative, an ethylene-vinyl acetate copolymer or a saponified product thereof, a polyacrylic resin, and a polyurethane. Among them, a plasticized polyvinyl butyral is most preferred in view of the adhesive strength and impact resistance.

As a specific method for cutting the original sheet material into a predetermined fan-shape as shown by the plan views of the interlayers in Figures 2(a) and (b), there may be mentioned, for instance, a method of intermittently stamping out the interlayer with a fan-shaped stamping blade, a method for cutting the original sheet material by scanning with a high power laser beam, or a method of employing a sheet cutting apparatus disclosed in Japanese Patent Application No. 8313/1982. For instance, in the case where a plasticized polyvinyl butyral sheet is to be cut by any one of the above methods, it is preferred to use an original sheet material stored under cooling at a temperature of from 0 to 25$^{\circ}$C, preferably from 10 to 15$^{\circ}$C, to maintain the sheet material at a temperature of from 5 to 50$^{\circ}$C, preferably 21$\pm$3$^{\circ}$C during the cutting operation, and to maintain the cut interlayers at a temperature of from 5 to 30$^{\circ}$C, preferably from 15 to 25$^{\circ}$C during the storage or transportation after the cutting operation. Further, the interlayer is preferably maintained at a temperature of from 15 to 30$^{\circ}$C, more preferably from 20 to 25$^{\circ}$C, during the lamination operation for the preparation of a laminated sheet glass. This temperature varies depending upon e.g. the degree of polymerization of the polyvinyl butyral, or the amount of the plasticizer contained in the interlayer. Therefore, it is advisable to maintain the optimum temperature taking these factors into account.

In short, the interlayer should preferably be maintained at a temperature of from 0 to 50$^{\circ}$C, more

preferably from 10 to 25°C under a stress of at most 0.1 kg, preferably at most 0.05 kg, per 1 cm of the width, during the entire period after its original sheet material is wound up by a winding-up machine, during the steps for the storage, the cutting operation, the inspection, the packaging, the shipping and the transportation, until it is used for lamination with glass sheets.

With the interlayer for a laminated sheet glass of the present invention, thus obtained, it is necessary that even when the values of the average shrinkage factor, the average thickness and the average surface roughness of the interlayer change, the deviations of the shrinkage factor, the thickness and the surface roughness of any parts of the interlayer from the respectively average values are within ±1%, ±40 μm and ±5 μm, respectively. Within the respective ranges, the deviation of the shrinkage factor is preferably within ±0.7, more preferably within ±0.3%, the deviation of the thickness is preferably within ±20 μm, more preferably within ±10 μm, and the deviation of the surface roughness is preferably within ±3 μm, more preferably within ±2 μm.

The thickness, the surface roughness and the shrinkage factor are determined as follows.

Thickness

Along portions A, B and C shown in Figure 3 in a plan view of the portions of the interlayer where the thickness was measured, the thickness of the interlayer for a curved laminated sheet glass was continuously measured in the direction indicated by an arrow with a dotted line by a continuous thickness meter, and an average value was calculated.

The deviation indicates the difference of the maximum thickness and the minimum thickness from the average

value.

Surface roughness

The surface roughness of the front and rear sides at 18 positions, i.e. positions $A_1-A_6$, $B_1-B_6$ and $C_1-C_6$, with

an equal distance from portions A, B and C as shown in Figure 3, was measured in accordance with JIS B0601, and a 10 point average surface roughness was obtained.

The deviation represents a difference of the maximum surface roughness and the minimum surface roughness from the average surface roughness.

Shrinkage factor

Eighteen sample pieces of 10 x 10 $cm^2$, i.e. sample

pieces $A_1-A_6$, $B_1-B_6$ and $C_1-C_6$, were cut out from an interlayer for a fan-shaped laminated sheet glass at positions with an equal distance from portions A, B and C as shown in Figure 3. A reference line having a predetermined length was drawn on each sample in the tangential direction of a curved fan-shape, and after heating at 54°C for 10 minutes, the shrinkage factor of the reference line of each sample was obtained by the following equation.

$$\text{Shrinkage factor} = \frac{\ell_0 - \ell}{\ell_0} \times 100$$

where $\ell_0$ is the length of the reference line prior to the heating, and $\ell$ is the length of the reference line after the heating.

The average shrinkage factor is an average value of 18 samples. The deviation represents a difference of the maximum shrinkage factor and the minimum shrinkage factor of each sample from the average value.

The interlayer for a laminated sheet glass of the present invention may have a colored zone with a predetermined width along the fan-shaped curvature. For the preparation of a laminated sheet glass for a windshield of an automobile, it is particularly advantageous that the interlayer of the present invention has a colored zone with a predetermined width along the shorter curved edge of the fan-shape (i.e. the interlayer as shown in the plan view of Figure 2(b)). The width of the colored zone is preferably within a range of at most 50%, more preferably at most 20%, from the curved shorter edge (hereinafter referred to simply as the "shorter edge"), of the width between the shorter edge and the curved longer edge. The percent transmission of a visible ray of the colored zone and the non-colored zone should preferably be less than 70% at the colored zone, and at least 70% at the non-colored zone. Further, in the case where a colored zone with a predetermined width is provided to prevent reflection of light, it is preferred that the colored zone has a color density gradient. Particularly, when used for a windshield for an automobile, it is preferred to control the color density gradient so that within a range of from 5 to 120 mm, preferably from 10 to 50 mm, from the boundary of the colored and non-colored zones, the percent transmittance of a visible ray has a gradient from 70% to 40% towards the shorter edge, and from the boundary of 40% to the shorter edge, the color density gradient is preferably controlled to be from 40 to 3%, preferably from 40 to 5%.

An interlayer having a colored zone of a predetermined width may be prepared by firstly producing an interlayer having no colored zone and then applying a printing ink to the interlayer. As the printing ink, there may be used inks disclosed in U.S. Patents No. 2,636,420, No. 2,739,080, No. 2,914,373, No. 3,346,526, No. 3,441,361 and No. 3,591,406 and Japanese Examined Patent Publication No. 45038/1980. Among them, a particularly preferred printing ink is the one disclosed in Japanese Examined Patent Publication No. 45038/1980, i.e. a printing ink obtained by dissolving from 12 to 35% by weight of at least one dyestuff in a N-lower alkyl pyrrolidone or its mixture with a small amount of a co-solvent. However, the ink is not restricted to those disclosed in the above patents. The application of the

0185796

printing ink to the interlayer may be conducted by a conventional method such as silk screen printing, gravure printing, spray coating, dip coating or knife coating. For the purpose of providing a color density gradient and in view of the outer appearance after the application, it is particularly preferred to employ gravure printing.

The interlayer for a laminated sheet glass of the present invention is cut to fit a curved laminated sheet glass, without application of an outer force such as heating or stretching. Accordingly, the thickness is substantially uniform without any irregularities at any parts of the interlayer. Further, no deformation or destruction of the surface pattern of the interlayer to facilitate the deaeration for the pre-pressing, takes place, the deaeration can adequately be effected, and no optical distortion of the laminated sheet glass will be brought about by the lamination, and it is possible to produce a laminated sheet glass which has a substantially uniform impact strength. Furthermore, since the interlayer has no stress due to the stretching, no defect due to the shrinkage of the interlayer will be brought about even if it is cut into the same dimension as the curved laminated sheet glass. Thus, it is extremely advantageous for use as an interlayer having a colored zone with a predetermined width. Further, by using the interlayer for a laminated sheet glass of the present invention, a step of trimming treatment after the pre-pressing will not be required, whereby not only the operation efficiency is improved, but also the loss of the original sheet material due to the trimming will be eliminated, and no disposal of a trimmed refuse will be required.

The interlayer of the present invention may usually be supplied in the form of a freezed sheet (i.e. a cooled sheet) on which no blocking agent is applied, and a step of removing the blocking preventing agent by washing with water during the process for the preparation of a laminated sheet glass can be eliminated, whereby the process can be simplified.

Now, the interlayer for a laminated sheet glass of the present invention will be described in further detail with reference to Examples. However, it should be understood that the present invention is by no means restricted by these specific Examples.

EXAMPLE :

An original sheet material of a plasticized polyvinyl butyral stored under cooling at $10^{\circ}C$ in a rolled form, was unrolled, fed to a sheet cutting apparatus having a roller heating device, and heated to a temperature of about $21^{\circ}C$. The heated sheet material was intermittently sent to a cutting system and cut into a fan-shape, whereby 10 sheets of interlayers were obtained. The interlayers were kept at $20^{\circ}C$. Care was taken not to exert any physical stress to the sheet material during the process from the unrolling operation to the cutting operation. The above sheet cutting apparatus was the one

- 15 -    0185796

disclosed in Japanese Patent Application No. 8313/1982, i.e. an apparatus comprising a cutting board, a cutter operable to move in an arcuate orbit above the cutting board, a pair of cutters operable to intersect the arcuate orbit and converge at the inside of the arcuate orbit or expand in the opposite direction to the converging, and a sheet supplying mechanism for supplying the sheet material along the cutting board.

The ten interlayers all had the same average thickness, average surface roughness and average shrinkage factor, which are shown below together with the respective maximum deviations.

|  | Average | Deviation |
|---|---|---|
| Thickness ($\mu$m) | 760 | $\pm 5$ |
| Surface roughness ($\mu$m) | 25 | $\pm 1$ |
| Shrinkage factor (%) | 2 | $\pm 0.1$ |

Further, a colored zone having a predetermined width was provided along the short edge of an interlayer cut in the same manner as above, whereby no change was observed in the average values and the deviations of the thickness, the surface roughness and the shrinkage factor.

COMPARATIVE EXAMPLE:

The same original sheet material for the interlayer as used in Example, was stretched in accordance with the method disclosed in Japanese Examined Patent Publication No. 9776/1983. Namely, the original sheet material was

heated to 50°C by passing it through heated rolls, and then wound up on a cone-shaped drum while stretching it by passing through pinch rolls. The sheet material wound up on the cone-shaped drum was placed in a heating chamber maintained at a temperature of 80°C, whereby the stress created in the interlayer was relieved to obtain an original sheet material, from which interlayers were cut out. The cutting was conducted in a direction perpendicular to the tangent direction of the curvature.

The average values and the deviations of the thickness, the surface roughness and the shrinkage factor of the interlayers are shown in below.

|  | Average | Deviation |
| --- | --- | --- |
| Thickness (μm) | 715 | ±50 |
| Surface roughness (μm) | 21 | ±6 |
| Shrinkage factor (%) | 3.5 | ±1.5 |

It is evident from the above results that the deviations of the thickness, the surface roughness and the shrinkage factor of the interlayers for a fan-shaped laminated sheet glass of the present invention, are substantially smaller than those of the stretched interlayers of the Comparative Example. Laminated sheet glasses were prepared by using the interlayer of the present invention and the stretched interlayer of the Comparative Example, respectively. The deaeration performance during the pre-pressing, and the optical distortion and the average breaking height of the laminated sheet glasses, are shown in Table 1.

The laminated sheet glasses were prepared as follows.

(1) Pre-pressing conditions:

The interlayer was sandwiched between a pair of curved glass sheets. The laminated assembly was sealed in a rubber bag and heated to bring the temperature of the interlayer immediately before the pre-pressing to $40^{\circ}C$. Then, the rubber bag is connected to a gas discharge tube, and heating was initiated at an ambient heating temperature of $117^{\circ}C$, while the rubber bag was evacuated to a pressure of -500 mmHg. Fifteen minutes later, the pressure was returned to atmospheric pressure to complete the pre-pressing. Five sample sheets of a size of 32 x 32 $cm^2$ were optionally cut out from each laminated sheet glass, and their transparency was measured, and the deaeration performance was compared.

(2) Lamination conditions:

The laminated product obtained by the above pre-pressing, was maintained at a temperature of $135^{\circ}C$ under pressure of 13.5 $kg/cm^2$ for 6 minutes in a processing chamber. Then, the temperature was lowered to $55^{\circ}C$, and the pressure was returned to atmospheric pressure to complete the laminating process.

After the completion of the laminating process, the optical distortion and the average breaking height of the laminated sheet glass were measured.

The transparency, the optical distortion and the average breaking height were measured in accordance with the following methods.

(a) Transparency

Standard laminated sheet glasses were prepared, in advance, to have a percent transmission of from 0 to 100% with an interval of every 10%, as measured by a gloss meter. A light is applied to a laminated sheet glass sample after the pre-pressing and the standard laminated sheet glass at an angle of incidence of $45^{\circ}$ and the quantity of the transmission was visually compared at an angle of $45^{\circ}$, whereupon the transparency of each sample was determined to the accuracy of 5%.

(b) Optical distortion

A laminated sheet glass sample of 30 x 60 $cm^2$ was cut out from each region I and II as shown in Figure 4, and the optical distortion was measured in accordance with JIS R3212.

(c) Average breaking height

Five samples of 32 x 32 $cm^2$ were optionally cut out from a laminated sheet glass after the lamination operation. While maintaining each sample at a temperature of $21^{\circ}C \pm 1^{\circ}C$, a steel ball having a weight of 2.268 kg was dropped from a predetermined height to the center of each sample. The test was repeated by gradually increasing the height from which the steel ball was dropped, and the height where 50% of the laminated sheet glass was resistant to the breakage, was determined
and taken as the average breaking height.

Table 1

|  | Example | | Comparative Example | |
|---|---|---|---|---|
| Transparency (%) | | | | |
| Average | 55 | | 40 | |
| Deviation | ±5 | | ±10 | |
| Optical distortion (mm) | | | | |
| Test region | I | II | I | II |
| Average | 0.8 | 1.5 | 1.3 | 3.5 |
| Deviation | ±0.2 | ±0.5 | ±0.5 | ±1.5 |
| Breaking height (m) | | | | |
| Average | 6.5 | | 5.5 | |
| Deviation | ±0.5 | | ±1.0 | |

It is evident from the results of Table 1 that the
laminated sheet glass prepared with use of the interlayer
of the present invention is improved in the optical
distortion by about 1/2 or more over the Comparative
Example, and has a smaller deviation of the breaking
height than that of the Comparative Example.

CLAIMS:

1. A fan-shaped interlayer for a curved laminated sheet glass, characterized in that deviations of the shrinkage factor, the thickness and the surface roughness at any part of said interlayer from the respective average values are within $\pm 1\%$, $\pm 40$ $\mu$m and $\pm 5$ $\mu$m, respectively.

2. The fan-shaped interlayer according to Claim 1, wherein the interlayer has a colored zone of a predetermined width along a curved edge of the fan-shape.

3. The fan-shaped interlayer according to Claim 2, wherein the interlayer is made of a plasticized polyvinyl butyral.

0185796

FIGURE 2 (a)

FIGURE 1 (a)

FIGURE 2 (b)

FIGURE 1 (b)

FIGURE 1 (c)

FIGURE 3

FIGURE 4

II

I

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | LU-A- 68 310 (E.F. DU PONT DE NEMOURS) <br> * Page 14, lines 21-26 * | 1 | B 32 B 17/10 <br> C 03 C 27/12 |
| A | AU-A- 512 569 (SAINT-GOBAIN INDUSTRIES) <br> * Claim 2 * | 1 | |

TECHNICAL FIELDS
SEARCHED (Int. Cl.4)

B 32 B
C 03 C

The present search report has been drawn up for all claims

| Place of search | Date of completion of the search | Examiner |
|---|---|---|
| THE HAGUE | 19-09-1985 | VAN BELLEGHEM W.R. |